# EUROPÄISCHE PATENTANMELDUNG

(11) **EP 0 916 880 A2**
(43) Veröffentlichungstag der Anmeldung: **19.05.1999**
(21) Anmeldenummer: 98118242.1
(22) Anmeldetag: 25.09.1998
(51) Int. Cl.: F16K 17/19

(54) **Be- und Entlüftungsventil**

(30) Priorität: 17.10.1997 DE 19746106
(71) Anmelder: Roth Werke GmbH, 35232 Dautphetal-Buchenau (DE)
(72) Erfinder: Sedlmayer, Rudolf Dipl.-Ing.FH, 66271 Kleinblittersdorf (DE)
(74) Vertreter: Bernhardt, Winfrid, Dr.-Ing.

(57) **Zusammenfassung**

Die Erfindung betrifft ein Ventil, insbesondere zur Be- und Entlüftung z.B. von Behältern. Das Ventil nach der Erfindung ist gekennzeichnet durch einen abdichtend gegen eine erste und zweite Durchlaßbegrenzung anliegenden Ventilkörper (22), der je nach Richtung eines über dem Ventil anliegenden Druckgefälles zur Bildung eines Öffnungsdurchlasses an der ersten oder zweiten Durchlaßbegrenzung durch das Druckgefälle elastisch verformbar ist. Ein solches Ventil mit einem durch elastische Verformung Öffnungsdurchlässe für entgegengesetzte Durchlaßrichtungen bildenden Ventilkörper arbeitet in vielen Anwendungsfällen zuverlässig und läßt sich mit verhältnismäßig geringem Aufwand herstellen.

## Beschreibung

Die Erfindung betrifft ein Ventil, insbesondere zur Be- und Entlüftung.

Es ist die Aufgabe der vorliegenden Erfindung, ein neues solches Ventil zu schaffen, das in vielen Anwendungsfällen zuverlässig funktioniert und sich verhältnismäßig leicht herstellen läßt.

Das diese Aufgabe lösende Ventil nach der Erfindung ist gekennzeichnet durch einen abdichtend gegen eine erste und zweite Durchlaßbegrenzung anliegenden Ventilkörper, der je nach Richtung eines über dem Ventil anliegenden Druckgefälles zur Bildung eines Öffnungsdurchlasses an der ersten oder zweiten Durchlaßbegrenzung durch das Druckgefälle elastisch verformbar ist.

Gemäß dieser Erfindungslösung gewährleistet ein elastisch verformbarer Ventilkörper die Ventilöffnung für entgegengesetzte Durchlaßrichtungen, d.h. z.B. die Ventilöffnung sowohl für eine Belüftung als auch Entlüftung.

In einer bevorzugten Ausführungsform der Erfindung ist der Ventilkörper zur Abdichtungsanlage gegen die Durchlaßbegrenzungen elastisch derart verformbar, daß das Druckgefälle je nach seiner Richtung den Dichtungsandruck des Ventilkörpers für die erste oder zweite Durchlaßbegrenzung verstärkt. Wächst z.B. in einem Gefäß ein durch das Ventil abzubauender Innendruck, so erhöht sich der Dichtungsandruck an der Durchlaßbegrenzung, an welcher der Öffnungsdurchlaß für die Belüftung gebildet wird, wodurch gesichert wird, daß eine Entlüftung bzw. ein Gasaustritt allein durch den an der anderen Durchlaßbegrenzung gebildeten Öffnungsdurchlaß bei einer definierten Druckdifferenz zwischen Innen- und Außendruck erfolgt.

In einer weiteren vorteilhaften Ausgestaltung der Erfindung kann die zur Bildung des Öffnungsdurchlasses an der ersten oder zweiten Durchlaßbegrenzung erforderliche Druckdifferenz unterschiedlich sein. Zum Beispiel kann eine Gefäßbelüftung über das Ventil schon bei sehr geringem Unterdruck im Gefäß erfolgen, während eine Gasabgabe über das Ventil erst bei wesentlich höherem Überdruck im Gefäß einsetzt.

In weiterer vorteilhafter Ausgestaltung der Erfindung liegt der Ventilkörper gegen die jeweiligen Durchlaßbegrenzungen in der Art einer je nach Richtung des Druckgefälles von der Durchlaßbegrenzung abschwenkbaren oder auf die Durchlaßbegrenzung zuschwenkbaren Lippe an. In einer solchen Ausführungsform der Erfindung liegt der Ventilkörper vorzugsweise mit einem Umfangsrand gegen die erste Durchlaßbegrenzung und mit dem Umfangsrand einer insbesondere zentralen Ausnehmung gegen die zweite Durchlaßbegrenzng an, wobei der Ventilkörper im wesentlichen rotationssymmetrisch in der Art einer insbesondere membranartigen Schale mit einer sich unter Umkehrung der Schalenkrümmung vom Schalenboden erstreckenden, die Ausnehmung aufweisenden Ausbuchtung ausgebildet ist.

In einer zweckmäßigen Ventilkonstruktion nach der Erfindung kann z.B. ein solcher Ventilkörper in einem Ein- bzw. Auslaßöffnungen aufweisenden Ventilgehäuse in einem die Ausnehmung insbesondere koaxial umgebenden Ringbereich gehaltert sein. Durch eine solche Halterung ist für die gegen die Durchlaßbegrenzungen anliegenden Teile des rotationssymmetrischen Ventilkörpers eine ungehinderte Bewegungsfreiheit zur Bildung des jeweiligen Öffnungsdurchlasses bzw. zur Verstärkung der Dichtungsanlage gegeben.

Vorzugsweise ist der ringförmige Halterungsbereich in einem Übergangsabschnitt zwischen den entgegengesetzt gekrümmten Teilen des Ventilkörpers vorgesehen, so daß die Halterung die Beweglichkeit der den Durchlaßbegrenzungen jeweils zugewandten Ventilkörperteile nicht beeinträchtigt.

In einer bevorzugten Ausführungsform der Erfindung ist der Ventilkörper, insbesondere formschlüssig, zwischen Halterungsteilen angeordnet, die in das Ventilgehäuse hinein von gegenüberliegenden Seiten vorstehen. Vorzugsweise weist der Ventilkörper auf wenigstens einer Seite eine Ringnut für die Aufnahme solcher Halterungsteile auf.

In einer weiteren bevorzugten Ausführungsform der Erfindung stehen Halterungsteile auf einer Ventilgehäuseseite von einer mit dem Ventilgehäuse insbesondere über eine Steck/Schnappverbindung verbindbaren Gehäuseabdeckung vor, wobei die Gehäuseabdeckung vorzugsweise einen, insbesondere durch eine Einbuchtung gebildeten, sich unter Bildung der zweiten Durchlaßbegrenzung zu der Ausnehmung erstreckenden Vorsprung aufweist.

Von einem solchen Vorsprung können sich, insbesondere für den Eingriff in die oben erwähnte Ringnut vorgesehene, Halterungsteile erstrecken.

In einer bevorzugten Ausführungsform erstrecken sich diese Halterungsteile von einer Ringschulter des Vorsprungs, und der Vorsprung weist zur Bildung der zweiten Durchlaßbegrenzung einen Endteil mit verringertem Durchmesser auf.

In einer insbesondere herstellungstechnisch vorteilhaften Ausführungsform der Erfindung sind der Ventilkörper, die Halterungsteile und der Vorsprung im wesentlichen koaxial zueinander und insbesondere koaxial einem vorzugsweise zylindrischen Ventilgehäuse ausgebildet, wobei die erste Durchlaßbegrenzung durch die Zylinderwand des Ventilgehäuses, gegen die der Ventilkörper mit seinem Umfangsrand anliegt, gebildet ist.

Das Ventilgehäuse kann Bestandteil eines Behälterverschlusses oder selbst in einen Behälterverschluß einschraubbar sein.

In einer weiteren bevorzugten Ausführungsform der Erfindung weist das Ventilgehäuse eine die Gehäuseein bzw. -ausgänge vor dem Eindringen von Flüssigkeit schützende Abschirmung auf.

Die Erfindung soll nun anhand eines Ausführungsbeispiel und der beiliegenden, sich auf dieses Ausführungsbeispiel beziehenden Zeichnungen näher erläutert und beschrieben werden. Es zeigen:
- Fig. 1: ein Ausführungsbeispiel für ein erfindungsgemäßes Ventil, daß in einen Behälterschraubverschluß eingeschraubt ist, in einer geschnittenen Seitenansicht,
- Fig. 2: das Ventil von Fig. 1 in einer einen Ausschnitt aufweisenden perspektivischen Ansicht,
- Fig. 3: ein Ventilgehäuseteil des Ventils von Fig. 1 und 2 in einer perspektivischen Ansicht,
- Fig. 4: das Ventilgehäuseteil von Fig. 3 in einer weiteren perspektivischen Ansicht,
- Fig. 5: einen in dem Ventil gemäß den Fig. 1 und 2 verwendeten Ventilkörper,
- Fig. 6: ein weiteres Gehäuseteil des Ventils von Fig. 1 und 2 in einer geschnittenen Seitenansicht,
- Fig. 7: das Gehäuseteil von Fig. 6 in einer perspektivischen Ansicht,
- Fig. 8: das Gehäuseteil von Fig. 6 und 7 in einer weiteren perspektivischen Ansicht, und
- Fig. 9: geschnittene Teilansichten des Ventils von Fig. 1 und 2 zur Erläuterung der Arbeitsweise des Ventils.

Mit dem Bezugszeichen 1 ist in den Figuren ein aus einem Kunststoffmaterial bestehender Schraubverschluß für einen nicht gezeigten Behälter bezeichnet. Ein Gewinde 2 des Schraubverschlusses ist zum Eingriff in ein entsprechendes Außengewinde, an einem Ansatzstück des Behälters vorgesehen.

Der Schraubverschluß 1 weist ein zentrales Innengewinde 4 auf, in das ein mit einem entsprechenden Außengewinde versehenes Ventil 3 eingeschraubt ist. Eine Ringdichtung 5 sorgt für einen Verschluß des zwischen dem Schraubverschluß 1 und dem Ventil 3 gebildeten Gewindespalts.

Das Ventil 3 umfaßt eine das genannte Außengewinde tragende zylindrische Gehäusewand 6 sowie eine Stirnwand 7. Von der Stirnwand 7 stehen in jeweils ringförmiger Anordnung jeweils vier Halterungsteile 8 bzw. 9 vor, wobei zwischen den Halterungsteilen 8 bzw. 9 in Ringumfangsrichtung verteilt Durchlaßöffnungen 10 vorgesehen sind.

Auf der der Stirnwand 7 gegenüberliegenden Gehäuseseite ist eine Gehäuseabdeckung 11 angeordnet, welche in den durch die Zylinderwand 6 gebildeten Hohlzylinder stirnseitig einsteckbar ist, wobei zur Befestigung der Gehauseabdeckung 11 an dem übrigen Gehäuse von der Gehäuseabdeckung 11 zum Gehäuseinneren hin vier Rastnasen 12 vorstehen, die in entsprechende Ausnehmungen 13 in der Zylinderwand 6 einrasten.

Die Gehäuseabdeckung 11 weist in dem gezeigten Ausführungsbeispiel eine Einbuchtung auf, durch die ein Vorsprung 14 mit einem im Durchmesser verringerten Endteil 15 und einer Ringschulter 16 gebildet ist. Von der Ringschulter 16 erstrecken sich entlang einem Ringbereich vier Halterungsteile 17. Um den Ringumfang verteilt sind zwischen den vier Halterungsteilen 17 Durchlaßöffnungen 18 vorgesehen.

Am Fuß des Vorsprungs 14 sind in der Gehäuseabdeckung 11 um den Umfang des Vorsprungs verteilt Durchbrüche 19 gebildet.

Mit dem Bezugszeichen 20 ist eine von der Gehäuseabdeckung 11 vorstehende Nase für den Eingriff in eine entsprechende Ausnehmung 21 am der Gehäuseabdeckung zugewandten Endrand der Zylinderwand 6 vorgesehen.

Mit dem Bezugszeichen 22 ist ein rotationssymmetrischer Ventilkörper bezeichnet, der in dem gezeigten Ausführungsbeispiel als eine schalenförmige Membran ausgebildet ist, welche auf ihrer der Gehäuseabdeckung 11 zugewandten Seite eine Ringnut 23 aufweist. Von dem Schalenboden steht eine Bodenausbuchtung 24 mit einer zentralen Ausnehmung 25 vor. In der Bodenausbuchtung 24 ist das Membranmaterial, bezogen auf die Schalenrandebene, entgegengesetzt zur übrigen schalenförmigen Membran gekrümmt.

Auf der der Gehäuseabdeckung 11 gegenüberliegenden Seite weist das Ventil einen Deckelansatz 50 auf, an welchem eine Ringschulter 51 für die Anlage gegen den Dichtungsring 5 und eine kreuzförmige Vertiefung 26 ausgebildet ist. Der Deckelansatz 50 weist ferner einen ringförmig überstehenden Randteil 27 auf, der sich etwa bis zu Teilen 28 erstreckt, die von dem Schraubverschluß 1 vorstehen, wobei in dem gezeigten Ausführungsbeispiel verteilt um das Ventil 3 vier solcher vorstehenden Teile 28 vorgesehen sind.

In dem überstehenden Rand 27 sind verteilt über den Randumfang vier Durchbrüche 29 vorgesehen.

Mit 30 ist eine im Boden der Vertiefung 26 vorgesehene Ausbuchtung bezeichnet, durch die ein entsprechender Teil der Stirnwand 7 des Ventilgehäuses in das Ventilgehäuse hinein vorsteht.

Mit dem Bezugszeichen 31 ist eine an Stegen 32 gehalterte gasdurchlässige Wandung bezeichnet, welche die Einbuchtung sowie die Durchbrüche 19 zum Behälterinnenraum hin abdeckt. Diese Wandung kann z.B. gitterartig sein oder aus einem Textilmaterial bestehen (z.B. Goretex).

In dem gezeigten Ausführungsbeispiel sind sämtliche Teile des Schraubverschlusses und des in den Schraubverschluß eingedrehten Ventils mit Ausnahme des Dichtungsrings aus einem Kunststoffmaterial hergestellt, wobei hier speziell.... verwendet wurde. In der Gehäusestirnwand 7 und dem sich daran anschließenden Deckelansatz 50 sind Durchlaßkanäle 52 vorgesehen, welche nach außen am Umfangsrand des Deckelansatzes 50 in der Draufsicht auf den Deckelansatz unterhalb des überstehenden Ringteils 27 öffnen.

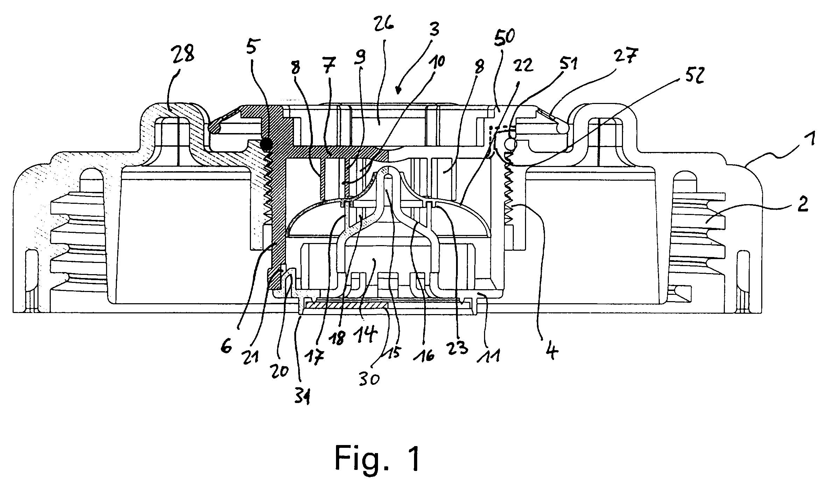

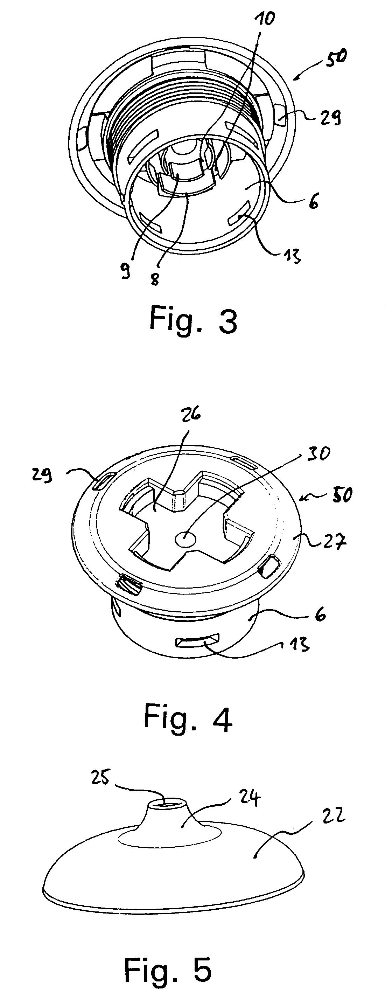

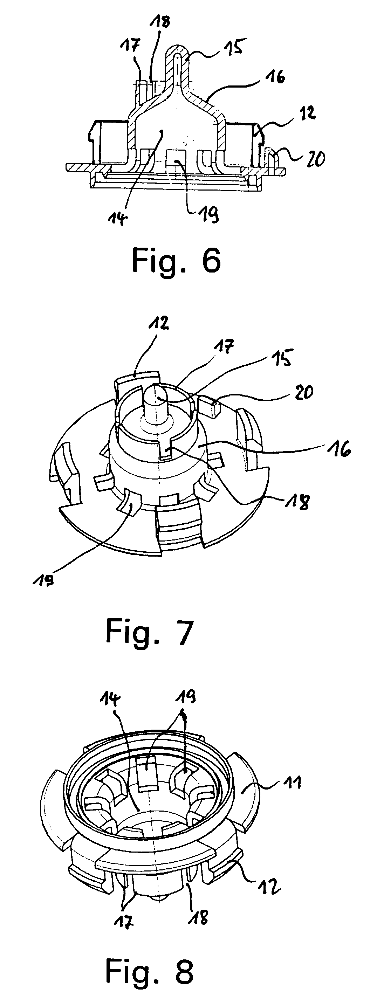

Zur Montage des in den Fig. 1 bis 8 beschriebenen Ventils 3 wird der als schalenartige Membran ausgebildete Ventilkörper 22 auf die Gehäuseabdeckung 11 aufgesteckt, wobei die Halterungsteile 17 in Eingriff mit der Ringnut 23 und die Ausnehmung 25 über ihren Umfang in Dichtungsanlage gegen den abgerundeten Endteil 15 des Vorsprungs 14 gelangen. Die Gehäuseabdeckung 11 mit dem Ventilkörper 22 kann nun auf das offene Ende des durch die Zylinderwand 6 gebildeten Hohlzylinders aufgesteckt werden, wobei die Rastnasen 12 der Gehäuseabdeckung 11 in die Rastausnehmungen 13 der Zylinderwand 6 gelangen. Durch die vorstehende Nase 20 und die entsprechende Ausnehmung 21 an der Zylinderwand 6 ist dafür gesorgt, daß die Anbringung der Gehäuseabdeckung 11 nur in einer bestimmten Stellung erfolgen kann, durch die ein Einrasten der Nasen 12 in die Rastausnehmungen 13 gewährleistet ist.

In diesem montierten Zustand liegt der Ventilkörper 22 in einem Ringbereich gegen die Halterungsteile 17 und die den Halterungsteilen 17 gegenüberliegenden Halterungsteilen 7 und 8 an. Der Umfangsrand des Ventilkörpers 22 befindet sich in Dichtungsanlage gegen die Innenseite der Zylinderwand 6.

Die Gehäuseabdeckung 11 liegt mit einem über die Rastnasen 12 vorstehenden Rand gegen den Stirnendrand der Zylinderwand 6 an.

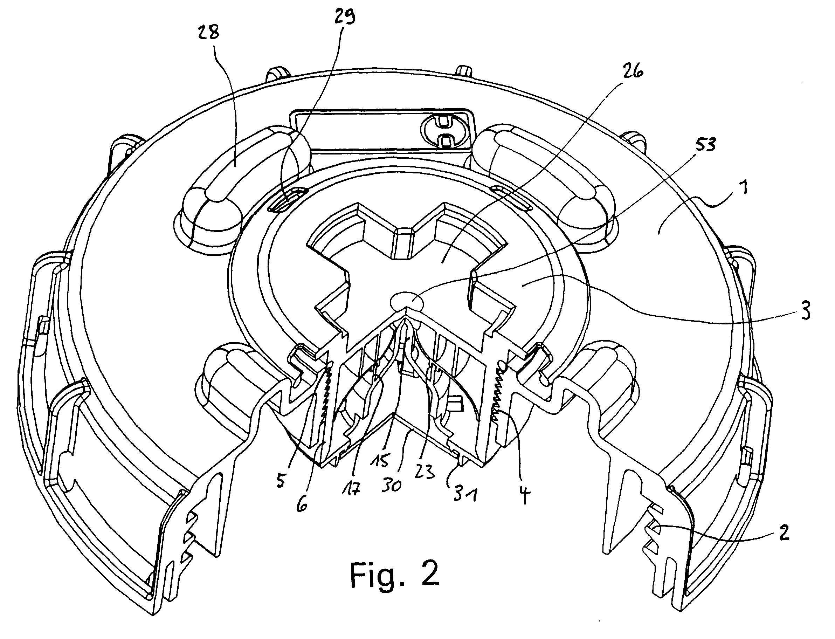

In diesem Zustand kann zur Montage des in den Fig. 1 und 2 gezeigten Schraubverschlusses 1 das Ventil in das Gewinde 4 des Schraubverschlusses 1 eingedreht und über die Ringdichtung 5 am Umfang abgedichtet werden. Zum Einschrauben könnte ein in die Vertiefung 26 oder die Durchbrüche 28 eingreifendes Werkzeug verwendet werden.

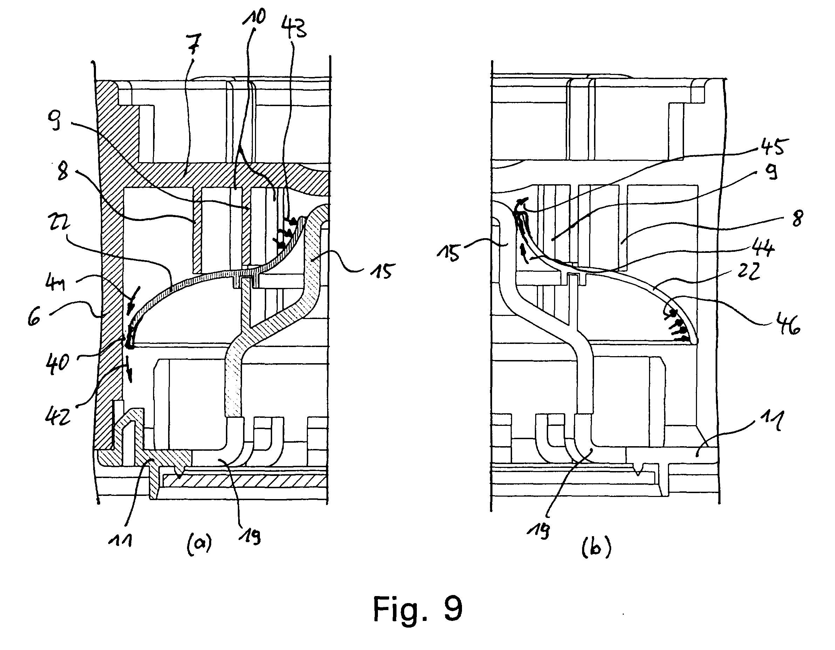

Unter Bezugnahme auf Fig. 9 wird nun die Wirkungsweise des anhand der Fig. 1 bis 8 beschriebenen Ventils erläutert.

Ist der Außendruck größer als der Innendruck z.B. in einem durch den Schraubverschluß 1 verschlossenen Gefäß, so kommt es bei einer ausreichend großen Druckdifferenz zu einer Verformung des Ventilkörpers 22, wobei sich der Umfangsrand des Ventilkörpers 22 aus der Abdichtungslage gegen die Zylinderwand 6 von der Zylinderwand unter Bildung eines ringförmigen Öffnungsdurchlasses 40 abhebt, so daß z.B. Luft entsprechend eingezeichneten Pfeilen 41 und 42 durch den Öffnungsdurchlaß treten kann. Diese Luft tritt über Durchlaßkanäle 52 in den Raum zwischen den Ventilkörper 22 und der Stirnwand 7 des Ventilgehäuses ein. Die durch den ringförmigen Öffnungsdurchlaß zwischen der Zylinderwand 6 und dem Umfangsrand des Ventilkörpers tretende Luft gelangt durch die Durchbrüche 19 und die gasdurchlässige Wand 31 in das durch den Schraubverschluß 1 geschlossene Gefäß.

Die zur Bildung des durch die Zylinderwand 6 und den Öffnungsrand des Ventilkörpers 22 begrenzten ringförmigen Öffnungsdurchlasses 40 wirksame Druckdifferenz sorgt andererseits dafür, daß entsprechend den Pfeilen 43 der Ventilkörper 22 am Rand der zentralen Ausnehmung 25 gegen den Endteil 15 des Vorsprungs 14 gedrückt wird so daß ein entsprechend höherer Abdichtungsdruck ausgeübt wird durch den gesichert ist, daß eine Belüftungsströmung ausschließlich durch den Ringdurchlaß am Umfangsrand des Ventilkörpers 22 bei einer definierten Druckdifferenz erfolgt.

Wenn umgekehrt in dem durch den Schraubverschluß 1 verschlossenen Gefäß ein Überdruck entsteht, weitet sich bei ausreichend großer Druckdifferenz die zentrale Ausnehmung unter Abhebung ihres Randes von dem Endteil 15 des Vorsprungs 14 auf, so daß entsprechend Pfeilen 44 und 45 eine Gasströmung durch einen zwischen dem Endteil 15 und dem Rand der Ausnehmung 25 des Ventilkörpers 22 gebildeten ringförmigen Öffnungsdurchlaß 54 treten kann.

Ein Überdruck im Gefäß führt andererseits dazu, daß entsprechend Pfeilen 46 der Umfangsrand mit erhöhter Anlagekraft gegen die Zylinderwand 6 drückt und so für eine wirksamere Abdichtung sorgt, durch die gesichert ist, daß ausschließlich durch den Öffnungsdurchlaß 54, der durch den Endteil 15 des Vorsprungs 14 und den Rand der Ausnehmung 25 begrenzt ist, strömt.

In dem gezeigten Ausführungsbeispiel ist der Ventilkörper 22 so geformt und ringförmig gehaltert, daß die zur Belüftung erforderliche Druckdifferenz wesentlich geringer ist als die Druckdifferenz, die erforderlich ist, damit bei Überdruck im Gefäßinneren Gas durch das Ventil nach außen strömen kann. Das heißt, es ist eine wesentlich größere Druckdifferenz erforderlich, einen Öffnungsdurchlaß zwischen dem Endteil 15 und dem Rand der Ausnehmung 25 als zwischen dem Umfangsrand des Ventilkörpers 22 und der Zylinderwand 6 des Ventilgehäuses zu bilden.

Die in das Gefäß ein- und austretenden Gase treten jeweils durch die Durchlaßöffnungen 18 zwischen den Halterungsteilen 17 sowie durch die Öffnungen 10 zwischen den Halterungsteilen 8 und 9 hindurch.

Die durchlässige Wand 31, welche die den Vorsprung 14 bildende Einbuchtung und die Durchbrüche 19 abdeckt, sorgt dafür, daß bei Bewegungen keine Flüssigkeit in das Ventil eindringen kann, etwa durch einen infolge von Bewegungen eines durch den Schraubverschluß abgeschlossenen Gefäßes im Gefäß auftretenden Schwall.

Der Randteil 27 an dem Deckelansatz 50 des Ventils deckt die Durchlaßkanäle 52 so ab, daß nicht unmittelbar Flüssigkeitstropfen insbesondere durch schräg auftreffenden Regen in die Durchlaßkanäle eintreten können.

Die von dem Schraubverschluß 1 vorstehenden Teile 28 verhindern beim Ein- und Ausschrauben des Verschlusses ein Mitdrehen des Ventils 3 und bilden darüber hinaus Sicken, die dem Verschluß insbesondere im Bereich des Innengewindes 4 eine hohe Formstabilität verleihen.

In dem gezeigten Ausführungsbeispiel ist der Ventilkörper 22 zwischen zueinander ausgerichteten Halterungsteilen 9 und 17 gehaltert, während die Halterungsteile 8 von dieser ringförmigen Halterung abgesetzt sind und damit die Beweglichkeit des Ventilkörpers 22 im Bereich ihres Umfangsrandes beeinflussen. Somit sind u.a. die Halterungsteile 8 maßgebend für die zum Belüften erforderliche Druckdifferenz.

## Patentansprüche

1. Ventil, insbesondere für die Be- und Entlüftung,
gekennzeichnet durch einen abdichtend gegen eine erste (6) und zweite (15) Durchlaßbegrenzung anliegenden Ventilkörper (22), der je nach Richtung eines über dem Ventil (3) anliegenden Druckgefälles zur Bildung eines Öffnungsdurchlasses (40,54) an der ersten oder zweiten Durchlaßbegrenzung (6,15) durch das Druckgefälle elastisch verformbar ist.

2. Ventil nach Anspruch 1,
dadurch gekennzeichnet,
daß der Ventilkörper (22) zur Abdichtungsanlage gegen die Durchlaßbegrenzungen (6,15) elastisch derart verformbar ist, daß das Druckgefälle je nach seiner Richtung den Dichtungsandruck des Ventilkörpers (22) gegen die erste (6) oder zweite (15) Durchlaßbegrenzung verstärkt.

3. Ventil nach Anspruch 1 oder 2,
dadurch gekennzeichnet,
daß der Ventilkörper (22) gegen die jeweiligen Durchlaßbegrenzungen (6,15) in der Art einer je nach Richtung des Druckgefälles von der Durchlaßbegrenzung abschwenkbaren oder auf die Durchlaßbegrenzung zuschwenkbaren Lippe anliegt.

4. Ventil nach einem der Ansprüche 1 bis 3,
dadurch gekennzeichnet,
daß der Ventilkörper (22) mit einem Umfangsrand gegen die erste Durchlaßbegrenzung (6) und mit dem Umfangsrand einer insbesondere zentralen Ausnehmung (25) gegen die zweite Durchlaßbegrenzung (15) anliegt.

5. Ventil nach Anspruch 4,
dadurch gekennzeichnet,
daß der Ventilkörper (22) im wesentlichen rotationssymmetrisch in der Art einer insbesondere membranartigen Schale (22) vorzugsweise mit einer sich unter Umkehrung der Schalenkrümmung vom Schalenboden erstreckenden, die Ausnehmung (25) aufweisenden Ausbuchtung (24) ausgebildet ist.

6. Ventil nach Anspruch 4 oder 5,
dadurch gekennzeichnet,
daß der Ventilkörper (22) in einem Ein- bzw. Auslaßöffnungen (19,52) aufweisenden Ventilgehäuse in einem die Ausnehmung (25) insbesondere koaxial umgebenden Ringbereich gehaltert ist.

7. Ventil nach Anspruch 5 oder 6,
dadurch gekennzeichnet,
daß der Ventilkörper (22) in einem Übergangsbereich zwischen entgegengesetzt gekrümmten Abschnitten des Ventilkörpers gehaltert ist.

8. Ventil nach einem der Ansprüche 1 bis 7,
dadurch gekennzeichnet,
daß der Ventilkörper, insbesondere formschlüssig zwischen Halterungsteilen (8,9;17), die von gegenüberliegenden Seiten in ein Ventilgehäuse hinein vorstehen, angeordnet ist.

9. Ventil nach einem der Ansprüche 1 bis 8,
dadurch gekennzeichnet,
daß der Ventilkörper (22) eine Ringnut (23) für die Aufnahme von Halterungsteilen (17) aufweist.

10. Ventil nach einem der Ansprüche 1 bis 9,
dadurch gekennzeichnet,
daß Halterungsteile (17) auf einer Ventilgehäuseseite von einer mit dem Ventilgehäuse, insbesondere über eine Steck-/Schnappverbindung, verbindbaren Gehäuseabdeckung (11) vorstehen.

11. Ventil nach Anspruch 10,
dadurch gekennzeichnet,
daß die Gehäuseabdeckung (11) einen, insbesondere durch eine Einbuchtung gebildeten, sich unter Bildung der zweiten Durchlaßbegrenzung zu der Ausnehmung (25) erstreckenden Vorsprung (14) aufweist.

12. Ventil nach Anspruch 11.
dadurch gekennzeichnet,
daß sich von dem Vorsprung Halterungsteile (17), insbesondere für den Eingriff in die Ringnut (23), erstrecken.

13. Ventil nach Anspruch 12,
dadurch gekennzeichnet,
daß sich die Halterungsteile (17) von einer Ringschulter (16) des Vorsprungs (14) erstrecken und die Durchlaßbegrenzung durch einen verjüngten Endteil (15) des Vorsprungs (14) gebildet ist.

14. Ventil nach Anspruch 12 oder 13,
dadurch gekennzeichnet,
daß der Ventilkörper (22), die Halterungsteile (8,9;17) und der Vorsprung (14) im wesentlichen koaxial zueinander und insbesondere koaxial einem vorzugsweise zylindrischen Ventilgehäuse ausgebildet sind.

15. Ventil nach Anspruch 14,
dadurch gekennzeichnet,
daß die erste Durchlaßbegrenzung durch die Zylinderwand (6) des Ventilgehäuses, gegen die der Ventilkörper (22) mit seinem Umfangsrand anliegt, gebildet ist.

16. Ventil nach einem der Ansprüche 1 bis 15,
dadurch gekennzeichnet,
daß zur Bildung des Öffnungsdurchlasses (40,54) an der ersten oder zweiten Durchlaßbegrenzung (6,15) erforderliche Druckdifferenzen unterschiedlich sind.

17. Ventil nach einem der Ansprüche 1 bis 16,
dadurch gekennzeichnet,
daß das Ventil (3) Bestandteil eines insbesondere schraubbaren Behälterverschlusses oder mit einem Behälterverschluß (1) insbesondere über eine Schraubverbindung (4) verbindbar ist.

18. Ventil nach einem der Ansprüche 1 bis 17,
dadurch gekennzeichnet,
daß das Ventilgehäuse eine Ein- bzw. Ausgänge des Ventilgehäuses vor dem Eindringen von Flüssigkeit schützende Abschirmung (27;30) aufweist.
